# EUROPÄISCHE PATENTANMELDUNG

(11) **EP 1 174 561 A2**
(43) Veröffentlichungstag der Anmeldung: **23.01.2002**
(21) Anmeldenummer: 01117265.7
(22) Anmeldetag: 17.07.2001
(51) Int. Cl.: E04D 15/00, B66B 9/187

(54) **Förderband für Bedachungsmaterial**

(30) Priorität: 17.07.2000 DE 20012509 U
(71) Anmelder: Wehner, Klemens, 87745 Eppishausen (DE)
(72) Erfinder: Wehner, Klemens, 87745 Eppishausen (DE)
(74) Vertreter: Fiener, Josef

(57) **Zusammenfassung**

Zur Schaffung eines Förderbandes zum Transport von Bedachungsmaterial auf einem Dach, wird vorgeschlagen, daß das Förderband (1) an einer Unterseite (6) mehrere Rollen (7, 33, 13) aufweist, wobei zumindest eine Rolle als Befestigungsrolle (7) ausgebildet ist.

## Beschreibung

Die Erfindung betrifft ein Förderband, mit welchem Lasten, insbesondere Bedachungsmaterial auf Dächern transportiert werden können.

Beim Eindecken bzw. Abdecken eines Daches ist es bekannt, mit Hilfe eines langen Transportförderbandes oder eines Lastenaufzuges Bedachungsmaterial vom Boden auf das Dach zu transportieren. Dies ist dann problemlos möglich, wenn das Dach von beiden Seiten des Hauses aus gut erreichbar ist. Probleme gibt es immer dann, wenn eine Dachseite mittels des langen Förderbandes oder Lastenaufzuges nicht erreichbar ist. Dann sind die Dachdecker gezwungen, das Material, welches mittels des bekannten Schrägaufzuges auf den First transportiert wurde, auf der anderen Dachseite von Hand zu vertragen und zu verteilen. Vor allem bei großen Dächern bringt dies einen erheblichen Personal- und Zeitaufwand mit sich.

Einen Ansatz zum Lösen dieses Problems bietet CH 596 408. Diese Schweizer Patentschrift offenbart einen Dachwagen, mit welchem Bedachungsmaterial auf Dächern transportiert werden kann. Dieser Wagen hat eine schwenkbare Plattform, welche das Bedachungsmaterial aufnimmt und ist über ein Seil an einer Firststütze befestigt. Durch Längenänderung des Seils ist der Wagen entlang der Fallinie verfahrbar. Soll der Wagen in der Horizontalen verschoben werden, so muß die Firststütze gelöst und entlang der Firstkante verschoben werden. Nachteilig an dem bekannten Dachwagen ist, daß dieser nur in der Fallinie günstig verfahrbar ist, da beispielsweise dann, wenn der Dachwagen befüllt ist, das Lösen und Verschieben der Firststütze zum Verschieben des Wagens in der Horizontalen sehr kraftaufwendig ist. Außerdem ist dies etwas umständlich, da sich dann immer einer der Dachdecker zur Firststütze begeben muß, um diese zu verschieben. Weiterhin sind aus dem Stand der Technik Wägen bekannt, welche entlang der Dachfläche mittels Rollen verschoben werden können, welche auf den Dachlatten gleiten.

So ist beispielsweise aus der DE 35 17 291 ein Lastenaufzug bekannt, bei welchem der zum Lastentransport verwendete Wagen vom Aufzugssystem abgekoppelt und auf den Dachlatten entlang der Länge des Daches verschoben werden kann. Dieser Dachwagen ist jedoch auf der Rückseite des Daches nicht verwendbar, sondern nur dort, wo der Schrägaufzug montiert ist. Allgemein betrachtet bringt die Verwendung von Dachwägen außerdem den Nachteil mit sich, daß diese zuerst beladen werden müssen, ehe sie verschoben werden können. Dies bedeutet in der Praxis beispielsweise, daß mittels eines Schrägaufzuges oder Förderbandes das Bedachungsmaterial bis zum First transportiert wird, von wo es Arbeiter in Dachwägen umstapeln müssen, ehe sie dann verschoben werden können.

Aus den japanischen Schriften JP 7102714 und JP 9032225 sind Dachplattenfördersysteme bekannt, bei welchen ein Schienensystem über das gesamte Dach, d.h. über beide Dachseiten hinweg, verlegt werden. Auf dem Schienensystem kann dann ein Wagen, welcher das Bedachungsmaterial aufnehmen kann, entlangbewegt werden. Diese Fördersysteme bringen jedoch den Nachteil mit sich, daß sie zum einen sehr aufwendig aufzustellen sind und zum anderen auf dem Dach sehr viel Platz benötigen, was beim Ein- bzw. Umdeckvorgang nachteilig sein kann, da diese Stellen dann später noch nachbearbeitet werden müssen. Folglich sind Dacharbeiten auf der dem Schrägaufzug gegenüberliegenden Seite immer noch sehr personal- und zeitaufwendig.

Der vorliegenden Erfindung liegt deshalb die Aufgabe zugrunde, eine Vorrichtung zur Verfügung zu stellen, mit Hilfe derer Lasten auf einem Dach einfach und sicher transportiert werden können. Ein besonderer Aspekt besteht darin, eine Vorrichtung zur Verfügung zu stellen, mit der auf der einem Aufzug oder Transportvorrichtung gegenüberliegenden, nicht erreichbaren Dachseite Bedachungsmaterial personal- und zeitsparend transportiert werden kann.

Diese Aufgabe wird gelöst durch ein Förderband nach Anspruch 1. Bevorzugte Ausführungen sind Gegenstand der Unteransprüche.

Das erfindungsgemäße Förderband weist auf der dem Dach zugewandten Unterseite mehrere Rollen auf, von denen zumindest eine Rolle als Befestigungsrolle ausgebildet ist. Die Befestigungsrolle ist so gestaltet, daß sie entlang der Schmalseite einer Dachlatte verschiebbar ist. Außerdem ist vorgesehen, daß das Förderband zusätzlich zumindest eine Gleitrolle aufweist, welche entlang der Breitseite einer Dachlatte verschiebbar ist. Die entlang der Schmalseite einer Dachlatte, d.h. die Seite einer Dachlatte, welche zum First hin weist, verschiebbare Befestigungsrolle gewährleistet den sicheren Halt des erfindungsgemäßen Förderbandes auf dem Dach. Diese Rolle greift in das Lattensystem (oder ähnliches Dachplatten-Befestigungssystem) ein und fixiert das Förderband. Die auf der Breitseite der Dachlatten gleitende Rolle bringt zusätzlichen Halt des Förderbandes mit sich. Außerdem gewährleistet diese Gleitrolle ein leichtes Verschieben des Förderbandes, da ihre Auflagefläche relativ groß ist, insbesondere im Vergleich zur Befestigungsrolle. Vorzugsweise ist vorgesehen, daß die Gleitrolle mehr als eine Dachlatte, insbesondere zwei Dachlatten überdeckt. Die Verwendung von Rollen bringt den Vorteil mit sich, daß das Förderband auf diesen in der Horizontalen entlang den Dachlatten verschiebbar ist. Durch die unterschiedliche Gestaltung der Rollen als Befestigungs- und Gleitrollen wird sowohl dem Erfordernis Rechnung getragen, daß das Förderband auf dem Dach einen sicheren Halt findet, als auch, daß es einfach und mit geringem Kraftaufwand entlang der Dachfläche verschiebbar ist.

Das erfindungsgemäße Förderband weist einen Motor auf, dessen Drehrichtung umkehrbar ist. Dadurch kann mit dem Förderband Bedachungsmaterial sowohl von der Unterkante des Daches in Richtung zum First hin transportiert werden, als auch vom First in Richtung zur Unterkante des Daches, was besonders vorteilhaft ist. Dies bedeutet, daß das erfindungsgemäße Förderband sowohl geeignet ist für Abdeck- als auch für Eindeckarbeiten. Zum Abdecken werden die alten Dachplatten einfach auf das erfindungsgemäße Förderband gelegt, mit diesem zum First transportiert und auf der anderen Dachseite, beispielsweise entweder mittels eines Lastenaufzuges oder aber mittels einer Rutsche vom Dach transportiert. Beim Eindecken werden die Dachplatten oder anderes Material mittels eines Lastenaufzuges bis zum First transportiert und dort auf das erfindungsgemäße Förderband übergeben, welches es dann in Richtung Dachunterkante transportiert. Haben sich auf dem Förderband eine genügende Menge an Dachplatten angesammelt, so kann der Dachdecker das Förderband entlang der Länge der Dachplatten verschieben und an Ort und Stelle die Dachplatten verarbeiten. Dadurch entfallen arbeits- und zeitintensive Umstapelungsarbeiten und es entfällt das kräfteraubende Transportieren des Bedachungsmaterials von Hand. Folglich wird erheblich Personal und damit Kosten eingespart.

Das Förderband hat weiterhin den Vorteil, daß es für jede Dachneigung verwendbar ist, ohne daß irgendwelche Einstell- oder Änderungstätigkeiten vorgenommen werden müßten. Außerdem ist es auf allen Arten an Dächern einsetzbar. So können beispielsweise bei Walmdächern auf drei Seiten die erfindungsgemäßen Förderbänder angeordnet werden und auf der vierten Dachseite der Schrägaufzug montiert werden. Allgemein betrachtet kann durch den Einsatz des erfindungsgemäßen Förderbandes auch bei Dacharbeiten, bei denen alle Dachseiten mittels eines Schrägaufzuges zugänglich wären, das zeitraubende Umrüsten eingespart werden. Der Lastenzug kann während der gesamten Arbeiten an einem Platz verbleiben und die einzelnen Dachflächen werden einzig durch Verschieben und Verstellen des erfindungsgemäßen Förderbandes bedient.

Es ist ferner vorgesehen, daß das Förderband an zumindest einem Ende höhenverstellbar ist. Dies bringt mehrere Vorteile mit sich. Dadurch kann zum einen die Arbeitshöhe, sprich der Abstand vom Dach zur Oberkante des Förderbandes, individuell eingestellt werden. So kann der Dachdecker je nach Neigung die Höhe des Förderbandes verstellen, um so seine Kräfte für andere Arbeiten zu schonen. Zum anderen ist die Möglichkeit der Höhenverstellbarkeit vorteilhaft bei sehr großen Dächern, da zwei oder mehr der erfindungsgemäßen Förderbänder miteinander gekoppelt werden können. Hierfür wird das obere Ende des unteren Förderbandes soweit angehoben, bis das untere Ende eines oberhalb befindlichen Förderbandes, das in seiner Höhe sehr niedrig eingestellt ist, unter das untere Förderband geschoben werden kann. Dadurch werden beim Abdecken die Platten vom unteren Förderband auf das obere transportiert und von dort auf entweder weitere Förderbänder oder auf die andere Dachseite. Beim Eindeckvorgang wird das System umgekehrt, dies bedeutet daß dann das untere Ende des oberen Förderbandes höher liegt als das obere Ende des unteren Förderbandes. Somit läßt sich praktisch jede beliebige Dachlänge mit dem erfindungsgemäßen Förderband bedienen.

Außerdem ist ein Überlast-Schutzschalter vorgesehen, der so eingestellt werden kann, daß bei Auftreten eines gewissen Gewichtes der Motor, der das Förderband antreibt, automatisch abgeschaltet wird. Dadurch wird vermieden, daß das Förderband überlastet wird, beispielsweise indem zuviele Platten oder anderes Material auf diesem abgelagert wird. Dies ist besonders vorteilhaft, da dadurch die Dacharbeiter ihre Aufmerksamkeit nicht auf das Förderband richten müssen, sondern sich ihrer Arbeit widmen können.

Nachstehend wird die vorliegende Erfindung anhand der Zeichnungen näher erläutert und beschrieben. Hierbei zeigen
- Fig. 1:: eine perspektivische Gesamtdarstellung eines erfindungsgemäßen Förderbandes;
- Fig. 2:: eine detaillierte, teilweise geschnittene Draufsicht;
- Fig. 3:: einen Längsschnitt eines Details eines Ausführungsbeispiels;
- Fig. 4:: einen Längsschnitt eines Details eines weiteren Ausführungsbeispiels;
- Fig. 5:: eine schematische Ansicht eines Ausführungsbeispiels in Anwendung; und
- Fig. 6:: ein weiteres Anwendungsbeispiel des Förderbandes in schematischer Darstellung.

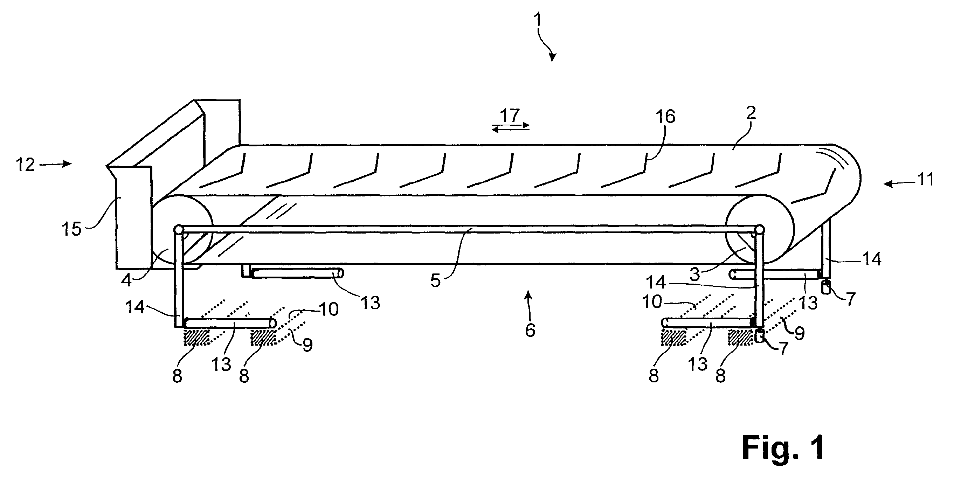

Wie aus Fig. 1 ersichtlich, besteht das erfindungsgemäße Förderband 1 aus einem Transportband 2, welches über zwei Trommeln 3 und 4 gelenkt wird. Vorzugsweise ist vorgesehen, daß in einer der Trommeln 3 bzw. 4 der Motor, insbesondere in Form eines Trommelmotors integriert ist. Es ist bevorzugt vorgesehen, daß der Antriebsmotor umschaltbar ist, um die Laufrichtung des Bandes 2 umkehren zu können. Weiterhin sind Verstrebungen 5 insbesondere in leichter Gitterbauweise vorgesehen, welche der Stabilisierung des Förderbandes 1 dienen. Das Förderband 1 weist auf seiner dem Dach zugekehrten Seite 6 Befestigungsrollen 7 auf. Diese Befestigungsrollen 7 sind entlang der Schmalseite 9 der Dachlatten 8 verschiebbar. Die Befestigungsrollen 7 sind an zumindest einem Ende 11, 12 des Förderbandes vorgesehen, vorzugsweise an dem dem First zugewandten Ende 11. Da die Befestigungsrollen 7 auf der Schmalseite 9 der Dachlatten 8 verschiebbar sind, d.h. auf der Seite der Dachlatten 8, welche in Richtung des Firstes des Daches weist, ist zum einen die Verschiebbarkeit des Förderbandes 1 gewährleistet und zum anderen ein sicherer Halt vor Abrutschen des Förderbandes 1 vom Dach. An dem der Dachunterkante zugewandten Ende 12 des Förderbandes 1 können ebenfalls den Befestigungsrollen 7 entsprechende Rollen vorhanden sein (nicht dargestellt), was die Abrutschsicherheit weiter verbessert. Sind keine Befestigungsrollen 7 am Ende 12 vorgesehen, so sind zumindest am Ende 12, vorzugsweise auch am Ende 11 zumindest eine, vorzugweise zwei Gleitrollen 13 vorgesehen, welche auf der Breitseite 10 der Dachlatten 8 verschiebbar sind.

Wie aus Fig. 1 ersichtlich, sind die Gleitrollen 13 vorzugsweise so gestaltet, daß zumindest zwei Dachlatten 8 mit einer Gleitrolle 13 überdeckbar sind. Dadurch wird das Verschieben des Förderbandes 1 erleichtert und die Auflagefläche erhöht, was wiederum die Abrutschsicherheit verbessert. Außerdem wird so das Gewicht der auf dem Band 2 befindlichen Last besser auf der Abrollfläche des Förderbandes 1 verteilt. Die Rollen 7 und 13 sind über holmartige Verstrebungen 14 mit dem Rahmen 5 des Förderbandes 1 verbunden. Aus Fig. 1 ebenfalls ersichtlich ist die Schutzvorrichtung 15, welche bevorzugt abnehmbar am unteren (oder auch am oberen) Ende des Förderbandes 1 befestigbar ist. In die Schutzvorrichtung 15 ist vorzugsweise ein Schaltermechanismus integriert, welcher bei Überlastung den Antriebsmotor des Förderbandes 1 abschaltet. Um auch bei steilen Dächern einen sicheren und abrutschfreien Transport des Materials auf dem Band 2 zu gewährleisten, sind auf dem Band 2 rippenförmige Erhebungen 16 vorgesehen, wie sie aus dem Stand der Technik bekannt sind. Wie bereits oben erwähnt, ist die Laufrichtung des Motors und damit die Transportrichtung des Förderbandes 1 umkehrbar, angedeutet durch den Doppelpfeil 17.

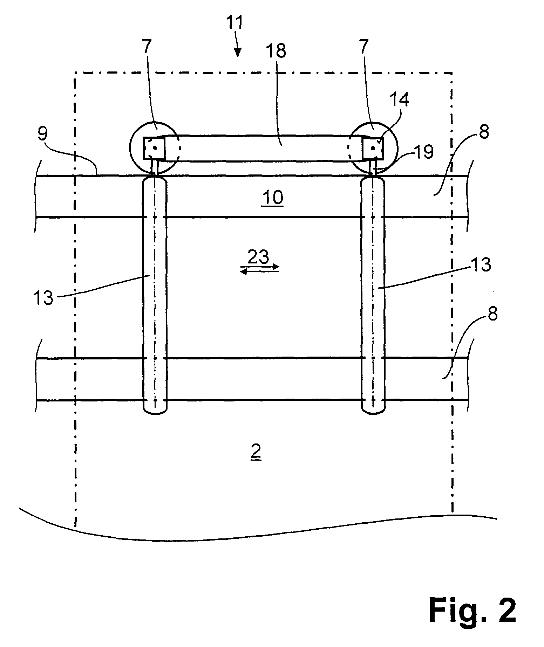

Fig. 2 stellt eine Draufsicht auf das obere Ende 11 des Förderbandes 1 dar, wobei unterhalb der Trommel 3 und des Bandes 2 ein Schnitt vorgenommen wurde. Aus der Zeichnung der Fig. 2 geht hervor, daß die Befestigungsrollen 7 auf der Schmalseite 9 der Dachlatten 8 verschiebbar sind, wohingegen die Gleitrollen 13 auf der Breitseite 10 der Dachlatten 8 verschiebbar sind. Das Förderband 1 ist auf den Dachlatten 8 entlang der Richtung des Pfeiles 23 verschiebbar. Zur weiteren Verstärkung des Rahmens des Förderbandes 1 ist eine Querverstrebung 18, welche auch der Querversteifung des Förderbandes 1 dient, vorgesehen. Aus Fig. 2 ist ebenfalls ersichtlich, daß die Gleitrollen 13 drehbar über auskragende Lagerbolzen 19 an der Verstrebung 14 des Rahmens des Förderbandes 1 gelagert sind, wie dies in Strichpunktlinien angedeutet ist.

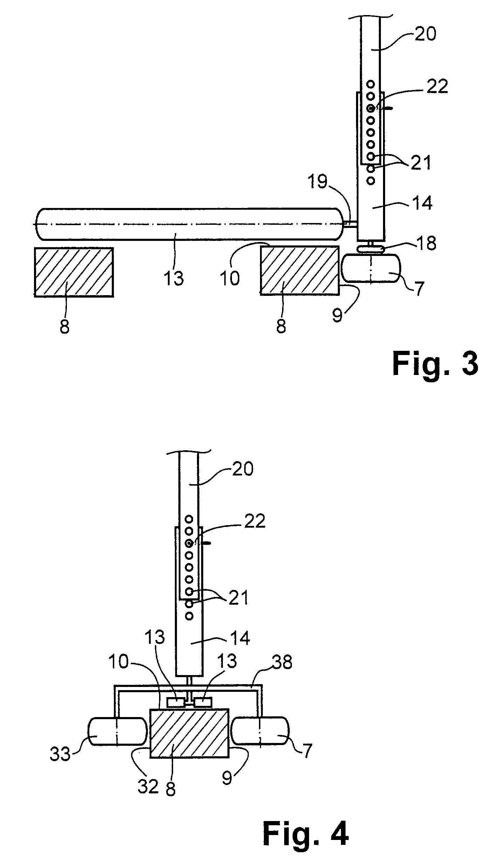

Fig. 3 zeigt einen Längsschnitt durch ein Detail des Förderbandes 1. Auch hier ist die Rollenanordnung der Rollen 7 und 13 deutlich zu erkennen. Die Befestigungsrolle 7 bewegt sich entlang der Schmalseite 9 der Dachlatte 8 und die Gleitrolle 13 entlang der Breitseite 10 der Dachlatte 8. Weiterhin geht aus Fig. 3 hervor, daß die Höhe des Förderbandes 1 verstellbar ist. Hierfür sind sämtliche aus dem Stand der Technik bekannte Mittel vorgesehen; in Fig. 3 dargestellt ist ein Stecksystem. Es ist vorgesehen, daß die Längsverstrebung 14 aus zwei ineinander verschiebbaren Teilen 14 und 20 besteht. Entlang der Verstrebung 14 und der in ihr geführten Verstrebung 20 sind Öffnungen 21 vorgesehen, welche miteinander zur Deckung gebracht werden können. Die gewünschte Höhe des Förderbandes 1 über der Dachfläche wird dadurch eingestellt, daß die Öffnungen 21 miteinander zur Deckung gebracht werden, so daß ein Steckbolzen oder Stift 22 durch die Öffnung 21 hindurchgeführt und beispielsweise auf der Gegenseite arretiert werden kann.

In Fig. 4 ist ein Detail eines weiteren Ausführungsbeispiels im Längsschnitt dargestellt. In diesem Ausführungsbeispiel wird eine besonders sichere Fixierung des Förderbandes 1 auf dem Dach erzielt, was besonders auf sehr steilen Dächern von Vorteil ist. Hierfür weist das Förderband 1 zusätzlich zur Befestigungsrolle 7 eine Gegenrolle 33 auf, wobei die Gegenrolle 33 entlang der der Dachunterkante zugewandten Schmalseite 32 der Dachlatte 8 verschiebbar ist. Die beiden Rollen 7 und 33 umgreifen auf diese Art und Weise die Dachlatte 8 und ermöglichen so einen stabilen Halt. Die Rollen 7 und 33 sind über eine Verstrebung 38 mit der Verstrebung 14 verbunden. Weiterhin ist vorzugsweise vorgesehen, daß zusätzlich eine oder mehrere Lauf- bzw. Gleitrollen 13 auf der dem Luftraum zugewandten Breitseite 10 einer Dachlatte 8 verschiebbar angebracht sind. Die Lauf- bzw. Gleitrollen 13 verbessern die Verschiebbarkeit des Förderbandes 1 erheblich.

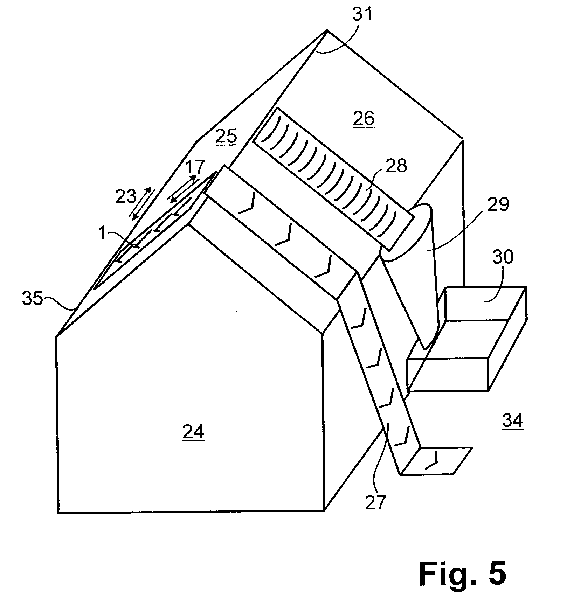

Fig. 5 zeigt eine schematische Darstellung eines erfindungsgemäßen Förderbandes 1 in Anwendung. Das Dach des Hauses 24 weist zwei Dachflächen 25 und 26 auf. Nur die Dachfläche 26 ist beispielsweise mittels eines Lastenaufzuges 27 von der Straße aus erreichbar. Der Lastenaufzug 27 wird errichtet und auf der gegenüberliegenden Dachfläche 25 (z.B. zu einem engen Hinterhof hin) wird das erfindungsgemäße Förderband 1 aufgestellt. Das Förderband 1 ist entlang der Richtung des Pfeiles 23 verschiebbar. Die Transportrichtung des Förderbandes 1 ist durch den Pfeil 17 angedeutet. Beim Abdecken der Dachfläche 25 wird nun so vorgegangen, daß nach Abräumen einer schmalen Dachfläche abgenommene Dachplatten auf das Förderband 1 gelegt werden und die Transportrichtung des Förderbandes 1 so gewählt wird, daß dieses die Dachplatten in Richtung des Firstes 31 des Hauses 24 transportiert. Dort wird das Material entweder dem Lastenaufzug 27 übergeben, oder aber beispielsweise über eine Rutsche 28 und einen Auffangtrichter 29 in einen Container 30 geleitet. Auf diese Art und Weise gelangen die Dachplatten und anderes Bedachungsmaterial von der Dachfläche 25 ohne großen Kräfteaufwand vom Dach des Hauses 24 auf den Boden 34. Umgekehrt gelangt beim Eindecken der Dachfläche 25 Bedachungsmaterial über den Lastenaufzug 27 auf den First 31 des Hauses 24 und wird dort auf das Förderband 1 umgeleitet. Die Förderrichtung 17 des Bandes 1 wird nun so gewählt, daß das Material in Richtung der Dachunterkante 35 der Dachfläche 25 transportiert wird. Das Überleiten des Materials von dem Förderband 1 auf den Lastenaufzug 27 und umgekehrt erfolgt bevorzugt ohne menschliche Hilfe.

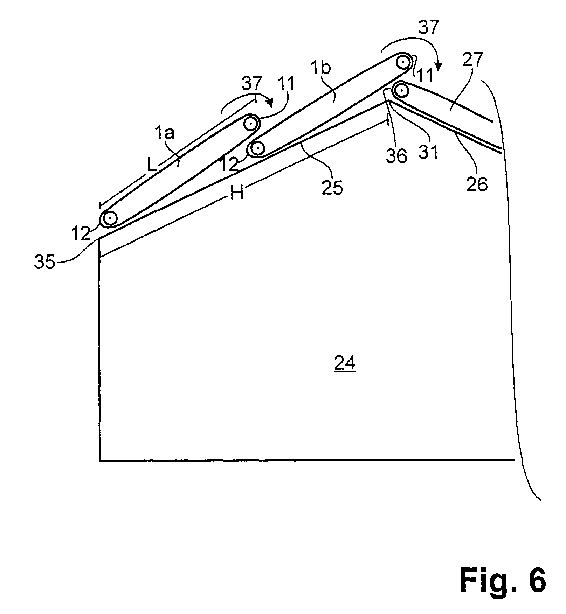

Fig. 6 stellt schematisch und beispielhaft einen Abdeckvorgang dar. Da die Höhe H der Dachfläche 25 im vorliegenden Beispiel höher ist als die Länge L der Förderbandes 1 ist vorgesehen, daß zwei Förderbänder 1 (gekennzeichnet mit den Bezugszeichen 1a, 1b) miteinander koppelbar sind. Dies geschieht insbesondere dadurch, daß das Ende 11 des Förderbandes 1a wie in Fig. 3 beschrieben so hoch gestellt wird, daß das Ende 12 des Förderbandes 1b unter dem Förderband 1a Platz findet. Das Ende 11 des Förderbandes 1b ist vorzugsweise etwas über das Ende 36 des Lastenaufzuges 27 erhaben. Die Förderrichtung des Abdeckvorganges ist durch die Pfeile 37 angedeutet.

Bedachungsmaterial kann nun auf eines oder beide Förderbänder 1a und 1b abgelegt werden und werden mit Hilfe der Förderbänder 1a und 1b auf den Lastenaufzug 27 aufgebracht und vom Dach des Hauses 24 transportiert.

Es ist vorzugsweise vorgesehen, daß die Länge L des Förderbandes 1 so gewählt wird, daß eine Vielzahl an Dächern mit nur einem Förderband 1 bearbeitet werden kann. Deshalb ist bevorzugt vorgesehen, daß das Förderband 1 eine Länge L von ungefähr 5 m aufweist. Ferner sollen die Lauf- bzw. Gleitrollen 13 vorzugsweise zumindest zwei Dachlatten 8 überdecken und weisen demzufolge eine Länge von ungefähr 30-70 cm, insbesondere eine Länge von 40 cm auf. Es ist vorgesehen, daß beispielsweise in der Mitte des Förderbandes 1 weitere Rollen, welche sowohl entlang der Schmalseiten 9 (und ggf. 32) als auch der Breitseite 10 der Dachlatten 8 verschiebbar sein können, vorgesehen sind. Hierfür werden beispielsweise weitere, nach unten abkragende Längsverstrebungen, in Art derer der Längsverstrebung 14 an der Haupt-Verstrebung 5 befestigt. Außerdem können aus Sicherheitsgründen zusätzlich Sicherungshaken vorgesehen sein, welche unter die Dachlatten 8 greifen und das Förderband 1 zusätzlich zur Befestigungsrolle 7 gegen Abrutschen sichern.

Zudem kann das Förderband 1 in handliche 2m-Stücke unterteilt sein, die mit einem (nicht dargestellten) Umkehrgetriebe gekoppelt sind. Dabei können die überstehenden Zapfen des Umkehrgetriebes von der Seite her in jeweiligen, einander gegenüberliegenden Rollen (z. B. 11 und 12) in Axialrichtung eingesteckt werden.

## Patentansprüche

1. Förderband zum Transport von Bedachungsmaterial auf einem Dach, **dadurch gekennzeichnet, daß**
das Förderband (1) an einer Unterseite (6) mehrere Rollen (7, 33, 13) aufweist, wobei zumindest eine Rolle als Befestigungsrolle (7) ausgebildet ist.

2. Förderband nach Anspruch 1, **dadurch gekennzeichnet, daß**
die Befestigungsrolle (7) entlang der dem First (31) zugewandten Schmalseite (9) einer Dachlatte (8) verschiebbar ist.

3. Förderband nach Anspruch 1 oder 2, **dadurch gekennzeichnet, daß**
die Befestigungsrolle (7) am oberen Ende (11) des Förderbandes (1) angeordnet ist.

4. Förderband nach einem der vorangegangenen Ansprüche, **dadurch gekennzeichnet, daß**
das Förderband (1) mehrere Lauf- bzw. Gleitrollen (13) aufweist, welche entlang der Breitseite (10) einer Dachlattung (8) verschiebbar sind.

5. Förderband nach einem der vorangegangenen Ansprüche, **dadurch gekennzeichnet, daß**
das Förderband (1) am oberen Ende (11) zwei Befestigungsrollen (7) und zwei Gleitrollen (13) und am unteren Ende (12) zumindest zwei Gleitrollen (13) aufweist.

6. Förderband nach einem der vorangegangenen Ansprüche, **dadurch gekennzeichnet, daß**
das Förderband (1) zumindest eine Befestigungsrolle (7) und eine Gegenrolle (33) aufweist, wobei die Gegenrolle (33) entlang der der Dachunterkante (35) zugewandten Schmalseite (32) einer Dachlatte (8) verschiebbar ist.

7. Förderband nach Anspruch 6, **dadurch gekennzeichnet, daß**
das Förderband (1) zusätzlich zumindest eine weitere Lauf- bzw. Gleitrolle (13) aufweist, welche auf der Breitseite (10) der Dachlatte (8) verschiebbar ist.

8. Förderband nach einem der vorangegangenen Ansprüche, **dadurch gekennzeichnet, daß**
die Gleitrollen (13) auf zumindest zwei nebeneinanderliegenden Dachlatten (8) verschiebbar sind, insbesondere daß die Gleitrollen (13) eine Länge von ungefähr 30-70 cm, insbesondere 40 cm aufweisen.

9. Förderband nach einem der vorangegangenen Ansprüche, **dadurch gekennzeichnet, daß**
das Förderband (1) an zumindest einem Ende (11, 12) höhenverstellbar ist und/oder das Förderband (1a) mit einem weiteren Förderband (1b) koppelbar ist.

10. Förderband nach einem der vorangegangenen Ansprüche, **dadurch gekennzeichnet, daß**
die Transportrichtung (17) des Förderbandes (1) umkehrbar ist, insbesondere daß das Förderband (1) einen Trommelmotor mit Rechts-Links-Lauf aufweist.
